(19) Europäisches Patentamt
European Patent Office
Office européen des brevets

(11) **EP 4 276 748 A1**

(12) **DEMANDE DE BREVET EUROPEEN**

(43) Date de publication:
**15.11.2023 Bulletin 2023/46**

(21) Numéro de dépôt: **23172928.6**

(22) Date de dépôt: **11.05.2023**

(51) Classification Internationale des Brevets (IPC):
**G06T 7/00** *(2017.01)* **G06T 7/90** *(2017.01)*

(52) Classification Coopérative des Brevets (CPC):
**G06T 7/0004; G06T 7/90;** G06T 2207/30136

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **12.05.2022 FR 2204524**

(71) Demandeur: **Commissariat à l'énergie atomique et aux énergies alternatives**
**75015 Paris (FR)**

(72) Inventeurs:
• **DELACROIX, Timothée**
**78450 VILLEPREUX (FR)**
• **GARANDET, Jean-Paul**
**92210 SAINT CLOUD (FR)**
• **MASKROT, Hicham**
**91310 MONTHLERY (FR)**
• **SCHUSTER, Frédéric**
**78100 ST GERMAIN EN LAYE (FR)**
• **LOMELLO, Fernando**
**91190 GIF-SUR-YVETTE (FR)**

(74) Mandataire: **Atout PI Laplace**
**Immeuble "Visium"**
**22, avenue Aristide Briand**
**94117 Arcueil Cedex (FR)**

(54) **CARACTÉRISATION D'UN LIT DE POUDRE MÉTALLIQUE PAR COLORIMÉTRIE**

(57) L'invention concerne un procédé (20) de détermination d'une concentration en oxygène (Cox) d'une poudre (MP) d'un matériau métallique (Mat) présentant une forme de lit de poudre (PB), ledit procédé comprenant les étapes consistant à :

A) Réaliser une image (Im) d'au moins une partie dudit lit de poudre, ladite image comprenant un ensemble de pixels (P), un pixel présentant une couleur codée selon un codage colorimétrique comprenant trois grandeurs (G1, G2, G3),

B) Déterminer la concentration en oxygène de la poudre à partir de valeurs desdites trois grandeurs associées à des pixels de l'image, en utilisant une fonction d'étalonnage (CF$_{Mat}$) prédéfinie, fonction dudit matériau, et reliant ladite concentration en oxygène et lesdites trois grandeurs.

FIG.2

**Description**

**DOMAINE DE L'INVENTION**

La présente invention concerne le domaine de la caractérisation de poudre métallique, plus particulièrement de la détermination de la concentration en oxygène de la poudre, celle-ci présentant une surface plane (lit de poudre). Cette caractérisation présente un intérêt typiquement lors de la mise en oeuvre d'un procédé de fabrication additive métallique d'une pièce.

**ETAT DE LA TECHNIQUE**

Lors de l'utilisation d'une poudre métallique, celle-ci est susceptible de s'oxyder, ce qui peut perturber son utilisation. Cette problématique apparait par exemple lors de la mise en oeuvre d'un procédé de fabrication additive métallique par consolidation sélective d'un lit de poudre (ou MAM-PBF pour Metallic Additive Manufacturing Powder Bed Fusion en anglais). Les domaines dans lesquels ce procédé est utilisé sont typiquement l'aéronautique, le spatial, le biomédical, l'automobile et le nucléaire.

La fabrication additive métallique consiste à réaliser des pièces par ajout successif de matière (métallique) couche par couche, à partir d'un fichier numérique 3D. On entend par lit de poudre PB une épaisseur maîtrisée de poudre MP présentant une surface plane. Le matériau métallique Mat constituant la poudre est par exemple choisi parmi : aciers inoxydables, alliages à base de titane, alliages à base d'aluminium, alliage à base de nickel.

La fabrication est réalisée par l'étalement de fines couches de poudre (typiquement entre 10 et 100 $\mu$m d'épaisseur) les unes au-dessus des autres, avec une étape de consolidation sélective de la matière entre chaque dépôt de couche. La consolidation sélective est réalisée par exemple avec un ou plusieurs faisceaux lasers, avec un faisceau d'électrons, par frittage laser ou par projection de liant. On entend par consolidation le fait de rendre la matière rigide en liant les particules de poudre entre elles.

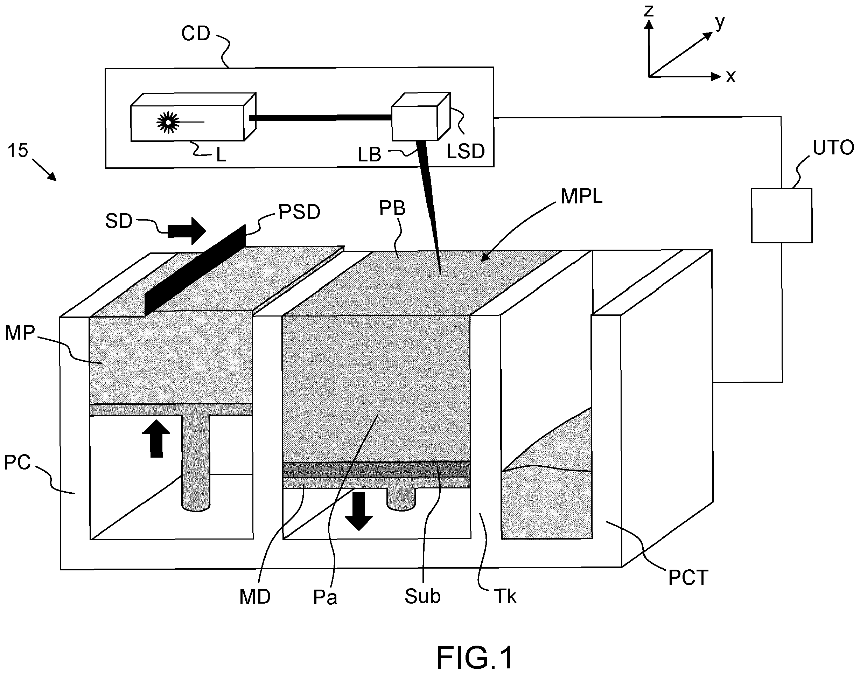

Un exemple de système 15 mettant en oeuvre une fabrication MAM-PBF d'une pièce Pa avec un faisceau laser LB (dénommée L-PBF) est illustré figure 1. Il comprend une réserve PC de poudre métallique MP, une plateforme de fabrication MPL et un bac de récupération de poudre PCT. Un dispositif d'étalement de la poudre PSD pousse la poudre de la réserve vers la plateforme MPL selon une direction d'étalement SD de manière à déposer une épaisseur de poudre maîtrisée (typiquement de l'ordre de 10 à 100 $\mu$m) dénommé lit de poudre PB. La direction SD est selon l'axe X et le plan du lit de poudre est le plan XY, Z étant la direction verticale. La poudre excédentaire lors de l'étalement est déversée dans le bac de récupération PCT. Le dispositif d'étalement PSD est par exemple un racleur, un rouleau ou une brosse. Dans le réservoir Tk servant à la fabrication est positionné un dispositif de déplacement vertical MD du substrat de fabrication Sub, qui fait descendre selon Z le substrat et la pièce Pa en formation au fur et à mesure que les couches sont déposées et consolidées. Au début de la fabrication le substrat Sub accueille le lit de poudre puis lors de la fabrication la pièce est accrochée à ce substrat. Le dispositif de consolidation CD comprend ici un laser L et un ensemble de miroirs LSD piloté par l'unité de traitement UT0 et qui dévie le faisceau laser LB en fonction des données du fichier 3D.

Ainsi, le procédé MAM-PBF comprend, pour chaque couche, un cycle comprenant une étape d'étalement de la poudre incluant l'évacuation de la poudre excédentaire (et le retour du dispositif PSD à sa position initiale), et une étape de consolidation. Puis le substrat est abaissé et un nouveau cycle réalise la couche suivante, jusqu'à la couche finale.

Une fois la fabrication terminée le substrat auquel sont fixées la ou les pièces fabriquées est retiré de la machine. La poudre remplissant le réservoir Tk et celle du bac PCT est récupérée, et éventuellement tamisée, caractérisée et le cas échéant mélangée à de la poudre neuve pour être réutilisée lors d'une future fabrication. En effet seule une très faible partie de la poudre est consolidée en tant que pièce lors d'une fabrication, et la poudre non fusionnée peut être récupérée et réutilisée pour les futures fabrications. Cependant, certaines particules sont dégradées du fait des interactions entre le laser et la matière, les hautes températures subies et l'atmosphère imparfaitement contrôlée dans la chambre de fabrication. Ainsi la réutilisation de la poudre donne lieu à une dégradation des attributs de certaines particules, qui sont réparties de manière aléatoire dans la poudre. La dégradation de la qualité des poudres induit une baisse des propriétés des pièces élaborées. Une augmentation de la teneur en oxygène dans la poudre recyclée a été observée pour de nombreux matériaux dans la littérature. Certaines particules de poudre s'entourent d'une couche plus ou moins homogène d'oxyde dont la nature chimique dépend du matériau Mat. Par exemple, la publication de T. Delacroix et al « Influence of powder recycling on 316L stainless steel feedstocks and printed parts in laser powder bed fusion » (Addit. Mauf., vol 25, p84-103, 2019) décrit ce phénomène pour des poudres d'acier inoxydable. Ainsi, un bon indicateur de la dégradation de la qualité de la poudre, typiquement lorsqu'elle est utilisée pour de la fabrication MAM-PBF, est son oxydation.

Actuellement, des échantillons de poudre sont collectés entre les fabrications et caractérisés ex-situ sur des petites quantités afin d'en évaluer la qualité. Ces faibles quantités de matière caractérisées ne sont pas nécessairement représentatives de l'ensemble de la poudre.

Dans certains cas, pour ne prendre aucun risque, la poudre non fusionnée et récupérée après la fabrication n'est pas contrôlée mais directement jetée afin de n'utiliser que de la poudre neuve et assurer la qualité des pièces fabriquées, ce qui conduit à une augmentation du coût de la pièce.

Un but de la présente invention est de remédier aux inconvénients précités en proposant un procédé de détermination de la concentration en oxygène d'une poudre d'un matériau métallique présentant une forme de lit de poudre, et un dispositif associé, rapide, peu onéreux et pouvant être implémenté directement, en ligne, lors de la mise en oeuvre d'un procédé de fabrication additive métallique sur lit de poudre.

## DESCRIPTION DE L'INVENTION

La présente invention a pour objet un procédé de détermination d'une concentration en oxygène d'une poudre d'un matériau métallique présentant une forme de lit de poudre, le procédé comprenant les étapes consistant à :

A) Réaliser une image d'au moins une partie dudit lit de poudre, ladite image comprenant un ensemble de pixels, un pixel présentant une couleur codée selon un codage colorimétrique comprenant trois grandeurs,

B) Déterminer la concentration en oxygène de la poudre à partir de valeurs desdites trois grandeurs associées à des pixels de l'image, en utilisant une fonction d'étalonnage prédéfinie, fonction dudit matériau, et reliant ladite concentration en oxygène et lesdites trois grandeurs.

Selon un mode de réalisation, le codage colorimétrique est le système RGB, les trois grandeurs étant dénommées R, G et B.

Selon un mode de réalisation, la fonction d'étalonnage est un polynôme du premier ou du second degré à trois variables correspondant aux trois grandeurs, et dont les coefficients sont fonction du matériau.

Selon une variante, l'étape A est réalisée en une fois avec une caméra.

Selon une autre variante, l'étape A est réalisée par balayage avec un scanner à plat.

Selon une première méthode, l'étape B comprend les sous étapes consistant à :

B1) Déterminer pour une pluralité de pixels de l'image une concentration en oxygène dite concentration pixel, via la fonction d'étalonnage,

B2) Déterminer la concentration en oxygène à partir d'une moyenne desdites concentrations pixel.

Selon une deuxième méthode, l'étape B comprend les sous étapes consistant à :

B'1) Déterminer une valeur moyenne de chaque grandeur à partir de valeurs desdites grandeurs associées à une pluralité de pixels de l'image,

B'2) Déterminer la concentration en oxygène à partir desdites valeurs moyennes des trois grandeurs via la fonction d'étalonnage.

Selon un autre aspect, l'invention concerne un procédé de fabrication additive métallique par consolidation sélective d'un lit de poudre incluant une étape de détermination de la concentration en oxygène dudit lit de poudre selon l'invention, mise en oeuvre au moins une fois au cours dudit procédé de fabrication additive métallique.

Selon un mode de réalisation du procédé de fabrication additive métallique et selon l'invention, le procédé de détermination de la concentration en oxygène du lit de poudre est appliqué au début du procédé de fabrication additive métallique, pendant l'injection du gaz inerte dans une chambre de fabrication, et/ou en fin du procédé de fabrication additive métallique, pendant le refroidissement d'une pièce fabriquée.

Selon un mode de réalisation, le procédé de fabrication additive métallique selon l'invention comprend une étape d'adaptation de paramètres du procédé en fonction de la valeur de la concentration en oxygène déterminée.

Selon un mode de réalisation, le procédé de fabrication additive métallique selon l'invention comprend en outre une étape de mélange de la poudre utilisée avec de la poudre neuve lorsque la concentration en oxygène est supérieure à un seuil prédéterminé, l'étape de mélange étant mise en oeuvre entre deux fabrications de pièces.

Selon un autre aspect, l'invention concerne un dispositif de détermination d'une concentration en oxygène d'une poudre d'un matériau métallique présentant une forme de lit de poudre, comprenant :

- un dispositif de capture d'image configuré pour réaliser une image d'au moins une partie dudit lit de poudre, ladite image comprenant un ensemble de pixels, un pixel présentant une couleur codée selon un codage colorimétrique comprenant trois grandeurs,

- une première unité de traitement configurée pour déterminer la concentration en oxygène de la poudre à partir de valeurs desdites trois grandeurs associées à des pixels de l'image, en utilisant une fonction d'étalonnage prédéfinie, fonction dudit matériau, et reliant ladite concentration en oxygène et lesdites trois grandeurs.

Selon un autre aspect, l'invention concerne un programme d'ordinateur comportant des instructions qui conduisent le dispositif selon l'invention à exécuter les étapes du procédé de détermination de la concentration en oxygène selon l'invention.

Selon encore un autre aspect, l'invention concerne un système de fabrication additive métallique par consolidation sélective d'un lit de poudre comprenant :

- un dispositif de détermination de la concentration en oxygène selon l'invention,

- un réservoir destiné à accueillir un substrat sur lequel une pièce sera fabriquée,

- un dispositif d'étalement de la dite poudre en surface du lit de poudre,

- un dispositif de consolidation de la poudre,

- une deuxième unité de traitement configurée pour piloter la mise en oeuvre de la fabrication additive métallique.

Selon un mode de réalisation le dispositif de capture d'image comprend un scanner à plat relié au dispositif d'étalement.

Selon un mode de réalisation le dispositif de capture d'image comprend une caméra haute résolution.

Selon encore un autre aspect l'invention concerne une méthode de détermination d'une fonction d'étalonnage pour la mise en oeuvre du procédé de détermination d'une concentration en oxygène selon l'invention comprenant les étapes consistant à :

- disposer d'une pluralité d'échantillons de ladite poudre, chaque échantillon présentant une concentration en oxygène différente et connue,

- réaliser une image de chaque échantillon, et déterminer une couleur moyenne associée, une couleur étant codée selon un codage colorimétrique comprenant trois grandeurs, une couleur associée à une valeur de concentration en oxygène étant dénommée donnée de calibration,

- déterminer ladite fonction d'étalonnage par régression à partir desdites données de calibration.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée illustre un système mettant en oeuvre une fabrication additive métallique par consolidation sélective d'un lit de poudre.

La figure 2 illustre le procédé de détermination d'une concentration en oxygène d'une poudre présentant une forme de lit de poudre selon l'invention.

La figure 3 illustre deux méthodes applicables pour la mise en oeuvre de l'étape B du procédé selon l'invention.

La figure 4 illustre la première méthode pour l'exécution de l'étape B selon l'invention.

La figure 5 illustre la deuxième méthode pour l'exécution de l'étape B selon l'invention.

La figure 6 illustre une première variante de dispositif selon l'invention dans laquelle le dispositif de capture d'image comprend une optique et un détecteur matriciel.

La figure 7 illustre un système de fabrication additive métallique par consolidation sélective d'un lit de poudre selon l'invention.

La figure 8 illustre de manière plus détaillée un système de fabrication additive métallique par consolidation sélective d'un lit de poudre selon l'invention.

La figure 9 illustre les données de calibration pour les 22 échantillons réalisés et représente l'intensité des trois composantes R, G et B associée aux différentes concentrations des échantillons.

La figure 10 illustre la couleur associée à 7 échantillons représentée dans l'espace colorimétrique CIExy 1931.

La figure 11 illustre les différentes mesures de concentration en oxygène réalisées avec la méthode 1 et la méthode 2 selon l'invention, et avec une méthode ex situ par fusion sous gaz inerte.

La figure 12 illustre les résultats de concentrations en oxygène obtenus avec les méthodes 1 et 2 du procédé selon l'invention, la méthode ex situ par fusion sous gaz inerte, et des valeurs théoriques pour les quatre échantillons.

## DESCRIPTION DETAILLEE DE L'INVENTION

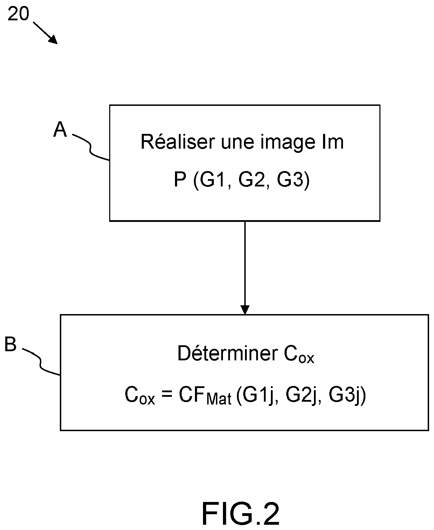

Le procédé 20 de détermination d'une concentration en oxygène Cox d'une poudre MP d'un matériau métallique Mat présentant une forme de lit de poudre PB selon l'invention est illustré figure 2. Il est basé sur la colorimétrie, et utilise la couleur des particules pour déterminer la teneur en oxygène de la poudre, qui est, comme décrit plus haut, un bon indicateur de la dégradation de la qualité de la poudre en fabrication additive métallique.

La concentration massique en oxygène Cox d'une particule représente la quantité d'oxygène entrant dans la composition de la particule, et principalement présente à sa surface. Elle est typiquement mesurée en particules par million poids, wppm en terminologie anglo-saxonne.

Lors de l'oxydation à haute température de poudres métalliques, une couche d'oxyde se forme en surface. Différentes épaisseurs de couches résultent de différentes conditions de chauffe, et donnent lieu à des teneurs en oxygène différentes. Des couleurs sont observables et obtenues du fait de ces différentes épaisseurs de film d'oxyde, et d'interférences entre la lumière réfléchie par l'interface film/métal et la lumière réfléchie par la partie supérieure de l'oxyde (interface film/air). Il est donc possible de corréler la couleur d'une particule à sa teneur en oxygène.

Le procédé selon l'invention effectue l'analyse directement sur le lit de poudre PB, c'est-à-dire sur une couche de poudre présentant une surface plane.

Il comprend une première étape A consistant à réaliser une image Im d'au moins une partie du lit de poudre PB. L'image comprend un ensemble de pixels Pi i indice du pixel, et lors de la prise d'image un pixel de l'image présente une couleur Coli codée selon un codage colorimétrique comprenant trois grandeurs G1, G2, G3. Du fait de la trivariance visuelle trois nombres suffisent pour le repérage d'une couleur.

Selon un mode de réalisation, le codage colorimétrique est le système RGB (ou synthèse additive RGB) et G1=R, G2=G et G3=B. On procède par ajout de lumière pour reproduire les différentes couleurs. Par la synthèse additive de trois faisceaux lumineux de couleurs rouge R, verte G et bleue B, on peut créer/caractériser la plupart des couleurs. Pour afficher/caractériser une couleur spécifique, on détermine l'importance de chacune des trois primaires additives RGB qui interviennent dans sa composition. L'addition absolue de ces trois couleurs donne le blanc. Ce modèle est très répandu car il correspond au fonctionnement des moniteurs couleur. Chaque couleur primaire oscille, en pourcentage entre 0% et 100% ou en valeur entre 0 et 255 (codage sur 8 bits, 24 bits en tout par couleur): une couleur particulière est ainsi spécifiée en indiquant les contributions de chaque couleur primaire. Disposer de 256 nuances de chaque couleur primaire permet de créer 16,7 millions de couleurs (256 x 256 x 256). Ce codage est également utilisé lors de la réalisation d'une image en couleur d'une scène avec un détecteur munis de filtres colorés. Avec le codage RGB à un pixel Pi est associé un triplet (Ri, Gi, Bi).

Mais tout type de codage de la couleur est utilisable dans l'invention, par exemple le codage (cyan, magenta, jaune), ou le codage CIE XYZ qui dérive du codage RGB, ou le codage CIE U'V'W', CIE L*a*b*.

Pour la mise en oeuvre du procédé, selon un mode de réalisation, on utilise le codage initial du dispositif de prise de l'image, ou selon un autre mode de réalisation on effectue une transformation (typiquement un changement de repère) vers un autre codage. L'important est de disposer d'une information sur la couleur des pixels de l'image du lit de poudre PB, cette information étant codée par un triplet de valeurs.

Dans une deuxième étape B, on détermine la concentration en oxygène de la poudre à partir de valeurs des trois grandeurs associées à des pixels de l'image, en utilisant une fonction d'étalonnage CF$_{Mat}$ prédéfinie, fonction du matériau Mat, et reliant la concentration en oxygène Cox et les trois grandeurs :

$$Cox = CF_{Mat}(G1, G2, G3)$$

Soit Pj les pixels de l'image qui sont utilisés dans le procédé selon l'invention. Les pixels Pj peuvent correspondre à l'ensemble des pixels de l'image ou à une partie des pixels de celle-ci.

On détermine ainsi la concentration en oxygène Cox de la poudre MP agencée sous la forme d'un lit de poudre PB et imagé, à partir d'un ensemble de triplet (G1j, G2j, G3j) associés aux pixels Pj.

Les inventeurs ont identifié, après de nombreuses expériences et recherches, des fonctions d'étalonnages CF$_{Mat}$ reliant une couleur donnée à une concentration en oxygène unique dans la plage d'intérêt (caractère bijectif entre couleur et concentration en oxygène). Cette plage d'intérêt est typiquement une concentration en masse d'oxygène, mesurée en wppm, comprise dans l'intervalle [200, 2500]. En outre il a été démontré que la mesure de la couleur effectuée par des dispositifs de prise d'image du commerce est compatible d'une détermination précise de la concentration en oxygène. A noter qu'à un matériau Mat donné peuvent correspondre plusieurs fonctions d'étalonnages.

De très bons résultats de mesure de concentration d'oxygène ont été obtenus. Il s'agit d'un résultat remarquable et surprenant. Les mécanismes de dégradation de la poudre en fusion laser sur lit de poudre sont en effet très complexes du fait de l'interaction laser-matière et des phénomènes physiques intervenant dans le bain de fusion, avec des flux de convections et éjectas de matière liquide, et l'entrainement de particules proche du laser par des pressions de recul. Dans la poudre recyclée, on retrouve des particules colorées, mais également des particules présentant des nodules d'oxydes en surface, sans films d'oxyde continu provoquant des couleurs (voir par exemple la publication précitée Delacroix et al). Il n'était donc pas évident à priori que la détermination de l'oxygène par colorimétrie pour contrôler la qualité des poudres en fabrication additive soit prédictible et comparable à des mesures conventionnelles (voir plus loin).

Le procédé 20 selon l'invention utilise le fait qu'il est possible de prendre une image du lit de poudre car celui-ci présente une structure plane. Il présente l'avantage de réaliser une caractérisation in situ et sans contact de la concentration en oxygène, en acquérant une image du lit de poudre et déterminant l'oxygène de la couche de poudre grâce à la colorimétrie de l'image. Il ne nécessite pas de manipuler la poudre, ne s'applique pas sur des prélèvements mais directement sur le lit de poudre, et peut donc être intégré facilement à un process utilisant un lit de poudre (voir plus loin).

En outre, sa mise en oeuvre nécessite peu de moyens, la fonction d'étalonnage étant déterminée de manière indépendante et stockée en mémoire. Les inventeurs ont également démontré que la fonction d'étalonnage peut s'exprimer comme un polynôme du premier ou du second degré à trois variables correspondant aux trois grandeurs, et dont les coefficients sont fonction du matériau Mat (voir plus loin un exemple de détermination de cette fonction d'étalonnage).

Selon une première variante, l'étape A (réalisation de l'image du lit de poudre) est réalisée en une fois avec une caméra et selon une deuxième variante détaillée plus loin l'étape A est réalisée par balayage avec un scanner à plat.

De manière non limitative dans la suite de l'exposé les trois grandeurs RGB seront utilisées pour le codage de la couleur.

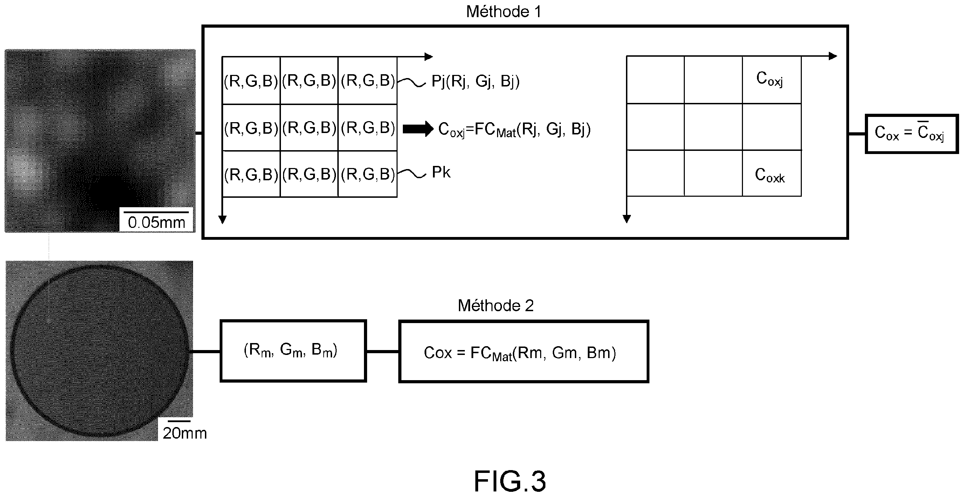

L'étape B du procédé selon l'invention peut être exécutée selon deux méthodes illustrées figure 3.

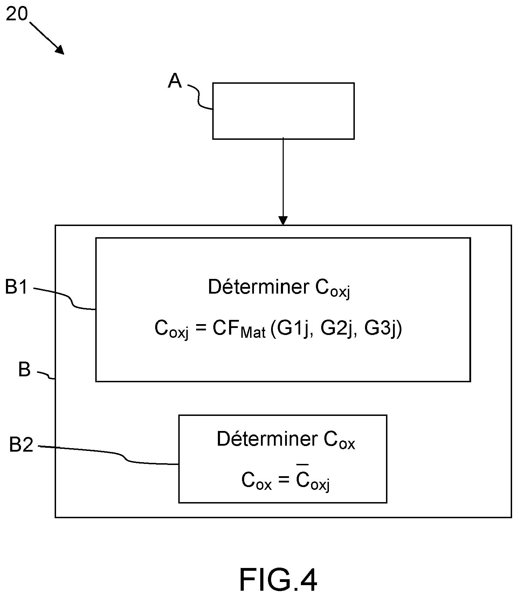

Selon une première méthode également décrite figure 4, on applique la fonction d'étalonnage pour obtenir la concentration en oxygène pour chaque pixel, puis on calcule la teneur moyenne en oxygène du lit par sommation sur tous les pixels individuels Pj. Ainsi on détermine d'abord dans une étape B1 et pour une pluralité de pixels Pj, la concentration en oxygène correspondante Coxj, dénommée concentration pixel, via la fonction d'étalonnage :

$$Coxj = FC_{Mat}(Rj, Gj, Bj)$$

Puis, dans une étape B2, on détermine la concentration en oxygène à partir d'une moyenne des concentrations pixel Coxj.

$$Cox = \overline{Coxj}$$

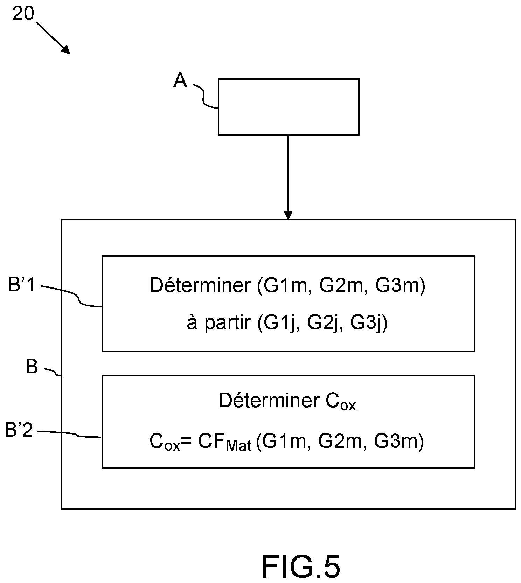

Selon une deuxième méthode également décrite figure 5, on détermine d'abord dans une étape B'1 une valeur moyenne (Rm, Gm, Bm) de chaque grandeur à partir de valeurs (G1j, G2j, G3j) des grandeurs associées à une pluralité de pixels de l'image Pj.

Puis, dans une étape B'2, on détermine la concentration en oxygène à partir des valeurs moyennes des trois grandeurs via la fonction d'étalonnage :

$$\text{Cox} = \text{FC}_{\text{Mat}}(\text{Rm, Gm, Bm}).$$

La première méthode devrait être théoriquement plus robuste car elle applique la fonction d'étalonnage à chaque pixel, et la moyenne de ces concentrations Coxj peut donc être supposée représenter la valeur physique de la quantité d'oxygène présente dans le lit de poudres. La deuxième méthode est plus rapide car le traitement d'image déterminant les grandeurs moyennes Rm, Gm, Bm sur un ensemble de pixel Pj est très simple et la fonction d'étalonnage n'est appliquée qu'une seule fois.

Au vu de la diversité des particules colorées présentes sur les lits de poudre de matières premières dégradées, il n'était pas évident a priori que les deux méthodes donnent des résultats similaires. Par ailleurs d'un point de vue mathématique, des différences significatives auraient pu être attendues quand la fonction de corrélation retenue n'est pas linéaire. Mais les inventeurs ont comparé les résultats obtenus avec les deux méthodes et la deuxième méthode a donné, de manière surprenante, des résultats aussi bons que la première méthode (voir exemple plus loin).

Le fait que le procédé selon l'invention opère in situ sur un lit de poudre permet de l'insérer facilement dans un procédé MAM-PBF dont un exemple est décrit dans l'état de la technique. Selon un autre aspect l'invention concerne un procédé de fabrication additive métallique par consolidation sélective d'un lit de poudre incluant une étape de détermination de la concentration en oxygène du lit de poudre selon le procédé 20 selon l'invention. Le procédé 20 est mis en oeuvre au moins une fois au cours du procédé MAM-PBF.

Selon un mode de réalisation, le procédé 20 est appliqué au début du procédé de fabrication additive métallique, pendant l'injection du gaz inerte dans une chambre de fabrication, et/ou en fin du procédé de fabrication additive métallique, pendant le refroidissement d'une pièce fabriquée.

Selon un mode de réalisation, l'étape A du procédé 20 s'effectue par balayage et de manière simultanée avec une étape d'étalement de la poudre (voir plus loin).

Grâce au procédé 20 selon l'invention, on dispose d'une nouvelle opportunité de contrôle de la qualité des poudres directement en ligne, dans la machine, sur des échantillons directement utilisés pour la fabrication et totalement représentatifs.

Le fait de disposer de la mesure de la concentration en oxygène in situ lors du procédé MAM-PBF permet des ajustements jusqu'à présent impossibles. Selon un mode de réalisation le procédé MAM-PBF comprend une étape d'adaptation des paramètres du procédé en fonction de la valeur de la concentration en oxygène déterminée. Il s'agit par exemple de modifier la puissance du laser, la vitesse de balayage du laser ou encore la distance entre deux trajectoires laser, qui influent toutes sur la densité d'énergie locale appliquée sur la matière, plus d'énergie devant être appliquée à une poudre entourée d'une couche d'oxyde pour l'éliminer par fusion ou vaporisation.

En outre, il est à présent possible d'éviter d'utiliser des poudres de mauvaise qualité, c'est-à-dire qui présentent une concentration en oxygène trop élevée. Selon un mode de réalisation le procédé de fabrication additive métallique comprend une étape de mélange de la poudre utilisée avec de la poudre neuve lorsque la concentration en oxygène de la poudre utilisée est supérieure à un seuil prédéterminé C0. L'étape de mélange est mise en oeuvre entre deux fabrications de pièces.

Selon un autre aspect, l'invention concerne un dispositif 10 de détermination de la concentration en oxygène Cox d'une poudre MP d'un matériau métallique Mat présentant une forme de lit de poudre PB. Le dispositif 10 comprend un dispositif de capture d'image ICD configuré pour réaliser une image Im d'au moins une partie du lit de poudre, l'image Im comprenant un ensemble de pixels Pi, un pixel de l'image présentant une couleur codée selon un codage colorimétrique comprenant trois grandeurs (G1, G2, G3). Le dispositif 10 comprend également une première unité de traitement UT1 configurée pour déterminer la concentration en oxygène de la poudre à partir de valeurs des trois grandeurs associées à des pixels de l'image, en utilisant une fonction d'étalonnage CF$_{\text{Mat}}$ prédéfinie, fonction du matériau Mat, et reliant la concentration en oxygène Cox et les trois grandeurs.

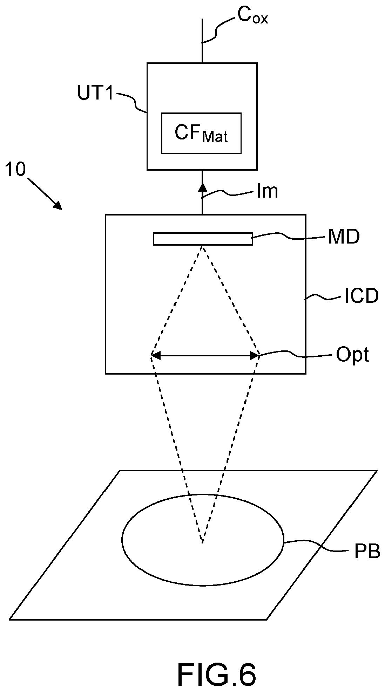

Une première variante de dispositif 10 selon l'invention est illustrée figure 6 dans laquelle le dispositif ICD comprend une optique Opt et un détecteur matriciel MD. L'image est capturée en une fois. Préférentiellement le dispositif de capture d'image comprend une caméra haute résolution.

Selon une deuxième variante de dispositif 10 selon l'invention, le dispositif ICD comprend un scanner à plat opérant une capture d'image du lit de poudre par balayage.

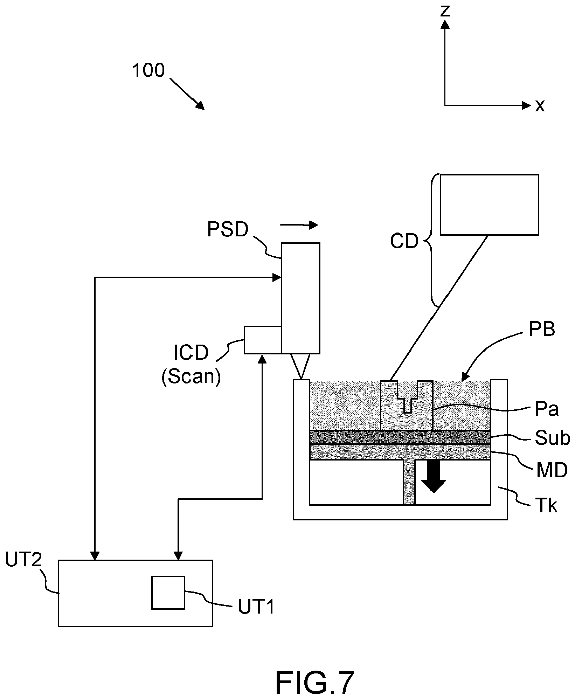

Selon un autre aspect, l'invention concerne un système 100 de fabrication additive métallique par consolidation sélective d'un lit de poudre illustré figure 7.

Le système 100 comprend un réservoir Tk destiné à accueillir un substrat Sub sur lequel une pièce Pa sera fabriquée, un dispositif PSD d'étalement de la poudre, un dispositif CD de consolidation de la poudre. Préférentiellement il comprend également un dispositif MD de déplacement vertical du substrat. Le système 100 comprend également un dispositif 10 selon l'invention, illustré figure 7 selon la deuxième variante, le dispositif ICD comprenant un scanner à plat Scan. Le système 100 comprend également une deuxième unité de traitement UT2 configurée pour piloter la mise en oeuvre de la fabrication additive métallique. Préférentiellement la première unité de traitement UT1 est intégrée dans UT2.

Selon un mode de réalisation, le dispositif de capture d'image ICD du système 100 comprend un scanner à plat Scan relié au dispositif d'étalement PSD. La capture d'image s'effectue alors avec un dispositif solidaire de celui utilisé pour l'étalement des poudres, ce qui est avantageux en termes d'implantation en machine. L'adjonction d'un scanner sur une machine de fabrication additive a par ailleurs déjà été décrite, par exemple dans le document US10981225, pour effectuer de l'inspection de surface.

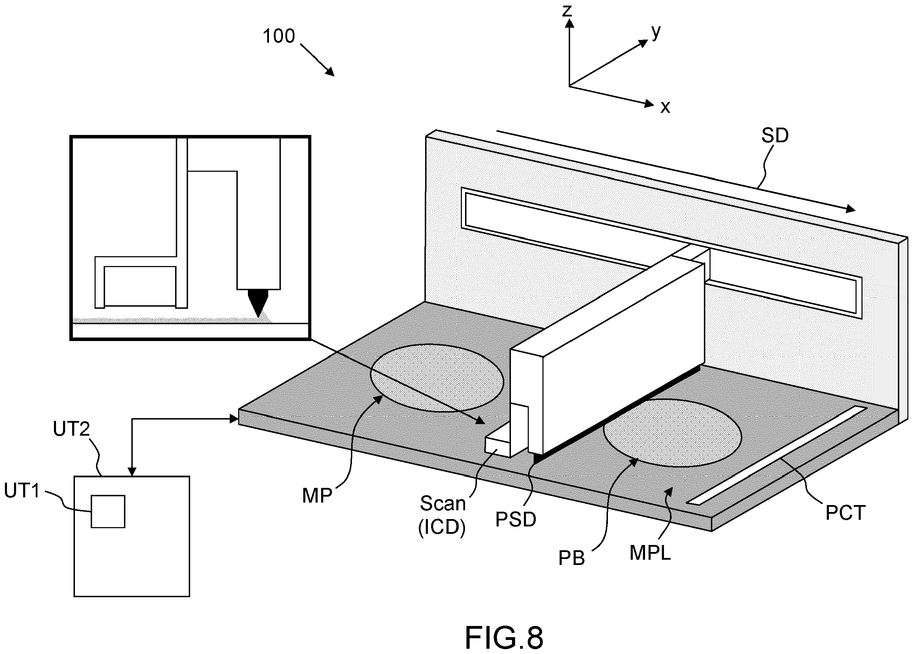

Une implémentation plus détaillée d'un système 100 avec un scanner Scan est illustrée figure 8.

Pour rappel, le principe du scanner est le suivant : une lampe, située sur un bloc mobile, balaye toute la surface du document/de la surface. L'opération se fait par à-coups. Elle découpe le document/la surface en lignes fictives et c'est le pas d'avancement du bloc qui détermine la résolution horizontale du scanner. Un capteur reçoit la lumière réfléchie par le document/surface et définit la couleur des points qui composent chaque ligne. Deux technologies équipent les scanners à plat, CCD ou CIS (Contact Image Sensor en anglais).

Dans un scanner de type CCD, la lampe émet une lumière blanche, qui est ensuite réfléchie ligne par ligne via un jeu de miroirs. En fin de course, le faisceau traverse une lentille qui concentre les rayons lumineux et les fait converger vers le capteur CCD composé de barrettes d'éléments photosensibles. Pour restituer la couleur des documents/surfaces, des filtres rouges, verts, et bleus les recouvrent alternativement. Le capteur mesure ligne par ligne la quantité de lumière reçue et la transforme en charge électrique, ensuite convertie en données numériques.

Dans la technologie CIS, la source lumineuse est constituée de diodes (LED) émettant de la lumière rouge, verte et bleue et les capteurs sont disposés sur toute la largeur du scanner et se déplacent en même temps que les LEDs. Une lentille cylindrique fait converger vers le capteur la lumière émise par les LEDs suivant les trois couleurs. Les LEDs, la lentille et le capteur font partie du même dispositif, un par pixel sur la largueur.

Les deux technologies sont compatibles avec l'invention, et les scanners du commerce délivrent généralement une information colorimétrique par pixel codée de 1 à 255 sur les trois couleurs R G et B, mais la technologie CIS est préférée car présentant de meilleures performances colorimétriques.

Plusieurs résolutions ont été testées et fonctionnent. Préférentiellement, une haute résolution, typiquement égale à 2400 dpi voire 4800 dpi, permettant de résoudre la taille d'une particule, est préférée pour une mesure plus fidèle de la couleur du lit de poudre. La vitesse du dispositif d'étalement étant relativement rapide (par exemple 50 mm/s), selon un mode de réalisation on effectue la capture d'image via le scan fixé au dispositif d'étalement lorsque celui-ci revient à sa position initiale, à une vitesse compatible de la haute résolution (par exemple 0.16 mm/s) et non pas pendant l'étalement de la poudre proprement dit.

La haute résolution est préférée car cela permet résoudre la taille des particules, et la dégradation d'un lit de poudre n'est pas homogène mais constituée de particules colorées dispersées sur la surface.

On décrit à présent une méthode de détermination de la fonction d'étalonnage $FC_{Mat}$ illustrée par un exemple expérimental, pour la mise en oeuvre du procédé 20 selon l'invention.

Il convient tout d'abord de disposer d'une pluralité d'échantillons de la poudre, chaque échantillon présentant une concentration en oxygène différente et connue.

On considère une poudre d'acier inoxydable SS316L et on réalise différentes oxydations de cette poudre en soumettant les échantillons à différentes combinaisons de temps et température dans un four. On mesure ensuite ex situ la concentration en oxygène par une méthode de fusion sous gaz inerte (Inert Fusion Gas en anglais) connue de l'homme de l'art. A l'oeil on constate que la couleur de la poudre varie entre gris puis orange/marron pour les faibles concentrations, puis au fur et à mesure que la concentration augmente la poudre devient rose puis bleue.

Ensuite, on réalise une image de chaque échantillon, et on détermine la couleur moyenne associée selon un codage colorimétrique comprenant les trois grandeurs (G1, G2, G3). Une couleur associée à une valeur de concentration en oxygène étant dénommée donnée de calibration.

Cette mesure a été réalisée sur les échantillons avec un scanner Canon de type CIS de résolution 4800 dpi, et la couleur a été mesurée pour l'ensemble des pixels de l'image enregistrée. Puis, une valeur moyenne de R, G et B été calculée à partir des valeurs mesurées pour les différents pixels.

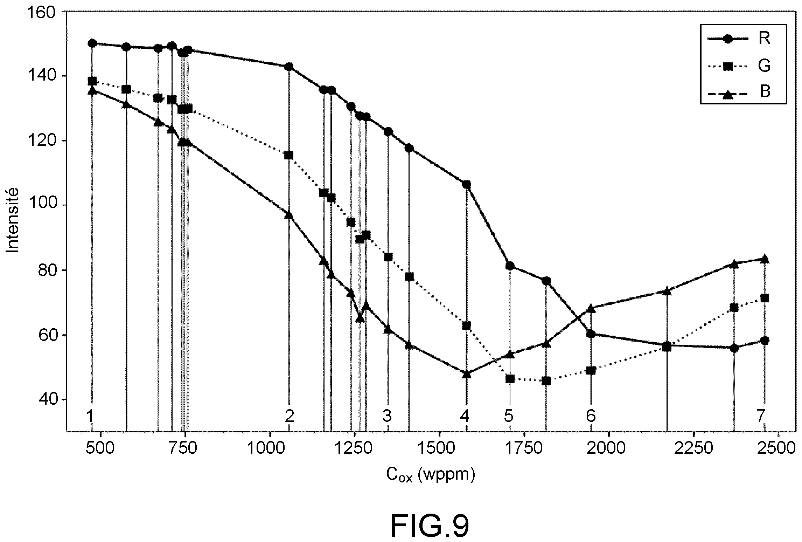

La figure 9 illustre les données de calibration pour les 22 échantillons réalisés présentant des concentrations en oxygène comprises dans la plage d'intérêt [200, 2500] wppm, et représente l'intensité des trois composantes R, G et B (chacune codée de 1 à 255) associée aux différentes concentrations des échantillons.

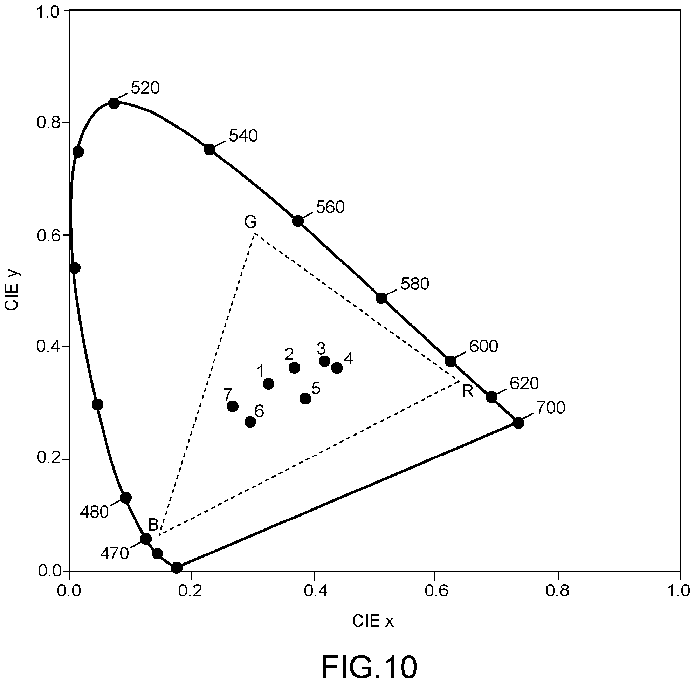

A titre illustratif, la couleur associée à 7 échantillons numérotés de 1 à 7 choisis parmi les 22 (voir tableau I ci-dessous) et été calculée et représentée figure 10 dans l'espace colorimétrique CIExy 1931 communément utilisé pour représenter les couleurs.

Tableau I : Echantillons caractérisés

| Echantillon | 1 | 2 | 3 | 4 | 5 | 6 | 7 |
|---|---|---|---|---|---|---|---|
| Cox mesurée (ppm massique) | 475 | 1055 | 1347 | 1579 | 1707 | 1946 | 2458 |

A partir de la position respective des 7 couleurs associées aux 7 échantillons de poudre d'acier inoxydable 316L présentant des teneurs en oxygène croissantes, on constate que sur la plage d'intérêt de Cox les couleurs sont bien différentes, et varient du gris au orange puis au bleu en passant par le rose.

Enfin, on détermine une fonction d'étalonnage par régression à partir des données de calibration. Préférentiellement on utilise une régression polynomiale du premier ou du second degré, qui ont donné de bons résultats.

Les variables R G et B sont respectivement notées x, y et z dans les équations suivantes.

Selon un premier exemple appliqué aux données de la figure 9, la fonction d'étalonnage $CF1_{Mat}$ a été déterminée par régression en considérant un polynôme de type $(1, x, y, z, xy, xz, yz, x^2, y^2, z^2)$ et on obtient :

$$CF1_{Mat} = 4036 - 49\,x + 0.24\,x^2 + 45\,y - 0.60\,xy + 0.05\,y^2 - 18z + 0.3\,xz + 0.36\,yz - 0.40\,z^2$$

Avec cette première régression, on calcule un coefficient de détermination de corrélation $R^2 = 0.99824$

Selon un deuxième exemple appliqué aux données de la figure 9, la fonction d'étalonnage $CF2_{Mat}$ a été déterminée par régression en considérant un polynôme de type $(1, x, y, z, xy, xz, yz)$ et on obtient:

$$CF2_{Mat} = 6117 - 95\,x + 178\,y - 0.77\,xy - 127\,z + 1.6\,xz - 0.77\,yz$$

Avec cette deuxième régression, on calcule un coefficient $R^2 = 0.99642$

Selon un troisième exemple appliqué aux données de la figure 9, la fonction d'étalonnage $CF3_{Mat}$ a été déterminée par régression en considérant un polynôme de type $(1, x, y, z, x^2, y^2, z^2)$ et on obtient :

$$CF3_{Mat} = 2906 + 13\,x - 0.30\,x^2 - 2.5\,y + 0.40\,y^2 - 6.22\,z - 0.22\,z^2$$

Avec cette troisième régression, on calcule un coefficient $R^2 = 0.99676$

Compte tenu des valeurs de $R^2$ très proches de 1, on constate que les trois régressions donnent de bons résultats.

En utilisant la fonction d'étalonnage $CF1_{Mat}$ ci-dessus, le procédé 20 selon l'invention est testé. Pour cela, on dispose d'échantillons de poudre d'acier inoxydable 316L neuve (R0), et de poudres ayant été utilisées dans un système MAM-PBF (par fusion laser) et recyclées plusieurs fois : 1 fois (R1), 5 fois (R5), 10 fois (R10) et 15 fois (R15). Ces recyclages ont fait l'objet d'une étude dans la publication précitée Delacroix et al et correspondent à la fabrication par fusion laser sur lit de poudre de plusieurs pièces sur un plateau, la récupération de toute la poudre non consolidée en tant que pièce, le tamisage de cette poudre afin d'enlever les particules les plus grosses, et la réintroduction de cette poudre tamisée dans la machine pour une nouvelle fabrication, sans ajout de poudre neuve.

Lors du passage dans la machine, le lit de poudre est scanné. Des zooms numériques sur les scans mettent en évidence une structure hétérogène des particules avec des changements de particule à particule et montrent la multitude de particules oxydées de différentes couleurs dans le scan de R15.

Préférentiellement, il convient d'utiliser le même dispositif de capture d'image pour la détermination de la fonction d'étalonnage et pour la caractérisation ultérieure de la poudre.

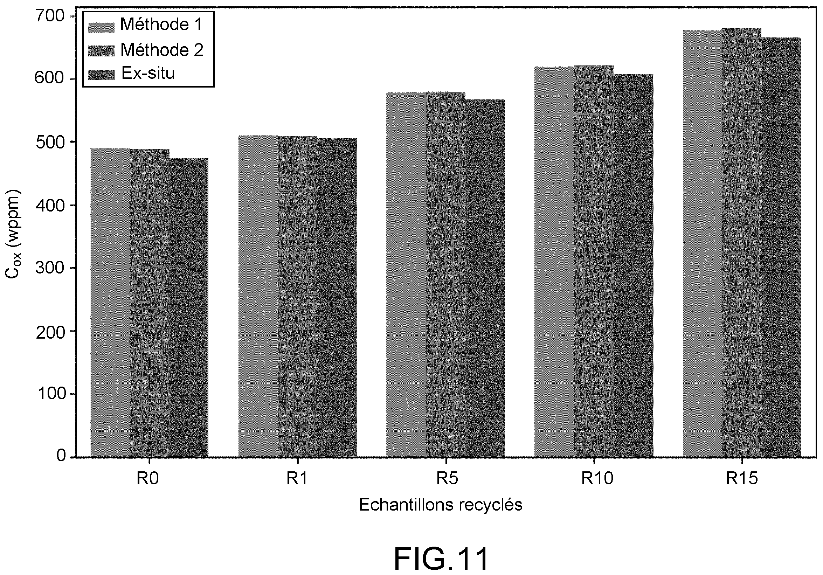

A partir des images réalisées par le scan pour chaque lit de poudre R0 à R15, la concentration en oxygène est déterminée en utilisant la méthode 1 et la méthode 2, et comparée à des mesures effectuées ex situ par fusion sous gaz inerte. La figure 11 illustre les différentes valeurs de Cox obtenues.

On constate que les valeurs de Cox obtenues avec le procédé selon l'invention suivent avec succès la tendance à l'augmentation de la concentration en oxygène à mesure que la poudre est de plus en plus réutilisée.

Un résultat remarquable est que les résultats obtenus par le procédé selon l'invention (méthodes 1 et 2) sont parfaitement en ligne avec les mesures ex situ. Les résultats avec les méthodes 1 et 2 selon l'invention sont légèrement supérieurs aux résultats ex situ, jusqu'à 10-15 wppm, mais restent pratiquement toujours dans l'écart type des valeurs d'analyse chimique.

Un autre résultat positif est que la deuxième méthode conduit à des résultats extrêmement proches de ceux obtenus avec la première méthode (moins de 5 wppm de différence). Par conséquent, seule la deuxième méthode peut être appliquée pour l'analyse des balayages de lit de poudre, car cette approche fournit des résultats de concentration d'oxygène presque instantanés (exécution du code de 70 ms pour une zone de 100 mm$^2$ / 7s pour une zone de 10 cm$^2$). La première méthode est néanmoins réalisable et plus rigoureuse.

Comme expliqué plus haut, il n'était pas évident à priori que la détermination de l'oxygène par colorimétrie pour contrôler la qualité des poudres en fabrication additive soit prédictible et comparable à des mesures conventionnelles. En outre, l'approche théorique consistant à dire que la couleur est uniquement déterminée par l'épaisseur du film autour de la particule n'est certainement pas totalement exacte, et le fait que le procédé selon l'invention donne un résultat exact de concentration d'oxygène avec une poudre très recyclée (R10 et R15) est en soi remarquable et surprenant.

De plus, l'oxydation lors du procédé a lieu dans une atmosphère sous gaz inerte (généralement de l'argon, de l'azote ou de l'hélium), avec des pressions partielles en oxygène très faibles et des températures subies par les poudres non connues et non uniformes. Il n'était donc pas non plus évident que la corrélation entre oxygène et couleur réalisée via une oxydation contrôlée en four sous air à des températures fixes (pour la détermination de la fonction d'étalonnage) permette de retrouver des valeurs similaires sur des particules colorées du fait d'une oxydation lors du procédé de fusion laser sur lit de poudre.

Pour tester encore plus loin la robustesse du procédé selon l'invention, des échantillons de poudre dégradés « artificiellement » ont également été analysés. On a réalisé des mélanges de poudre fraîche contenant différentes fractions de poudres oxydées au four (5 et 10 % en poids) avec différents niveaux d'oxygène L1 de 1580 wppm et L2 de 2350 wppm. On a donc 4 échantillons :

Echantillon [L1-5%]: 95% de poudre neuve - 5% de poudre oxydée au niveau L1

Echantillon [L1-10%] : 90% de poudre neuve - 10% de poudre oxydée au niveau L1

Echantillon [L2-5%]: 95% de poudre neuve - 5% de poudre oxydée au niveau L2

Echantillon [L2-10%] : 90% de poudre neuve - 10% de poudre oxydée au niveau L2

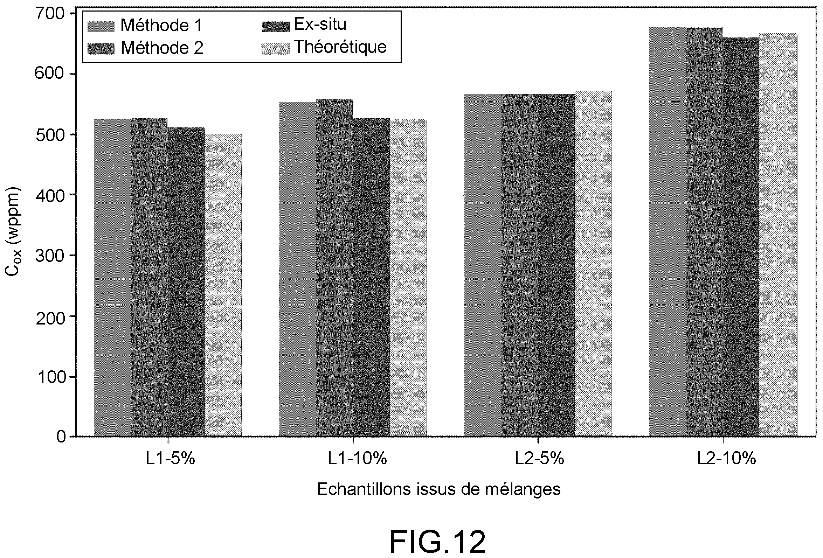

La figure 12 illustre les résultats de concentrations Cox obtenus avec les méthodes 1 et 2 du procédé selon l'invention, la méthode ex situ par fusion sous gaz inerte et des valeurs théoriques pour les quatre échantillons. Ces valeurs théoriques représentent la concentration en oxygène attendue des mélanges de poudres sur la base des fractions massiques et des teneurs en oxygène des deux constituants.

Les mesures par fusion sous gaz inerte des quatre échantillons sont en accord presque parfait avec les valeurs calculées théoriquement.

En ce qui concerne les résultats obtenus avec les méthodes 1 et 2 selon l'invention, les deux méthodes surestiment légèrement les valeurs par rapport à celles de l'analyse chimique. Les tendances sont toujours respectées, et les résultats des deux méthodes sont encore une fois quasiment identiques. Pour une fraction donnée de particules oxydées dans les enrobés, la surestimation de Cox est plus prononcée pour les échantillons L1. Ces derniers sont composés de particules orange clair, tandis que les échantillons L2 contiennent des particules bleues. On observe que les bords des particules colorées apparaissent plus sombres sur les images acquises, conduisant potentiellement à une surestimation. Les particules oxydées L2 étant déjà assez sombres, l'effet de bord est moins prononcé, avec moins de variations de couleur, ce qui pourrait expliquer les plus faibles écarts mesurés pour les mélanges L2. De plus, pour un niveau donné, la différence est plus importante pour les échantillons à 10 % de particules colorées. L'augmentation du nombre de particules colorées induit un effet de bord plus présent qui se traduit donc par des divergences plus importantes. Il est néanmoins remarquable et là aussi très surprenant que le procédé selon l'invention permette une estimation de Cox si proche de la réalité pour une poudre comprenant un mélange de particules d'oxydation différentes.

**Revendications**

1. Procédé (20) de détermination d'une concentration en oxygène (Cox) d'une poudre (MP) d'un matériau métallique (Mat) présentant une forme de lit de poudre (PB), ledit procédé comprenant les étapes consistant à :

   A Réaliser une image (Im) d'au moins une partie dudit lit de poudre, ladite image comprenant un ensemble de pixels (P), un pixel présentant une couleur codée selon un codage colorimétrique comprenant trois grandeurs (G1, G2, G3),

B Déterminer la concentration en oxygène de la poudre à partir de valeurs desdites trois grandeurs associées à des pixels de l'image, en utilisant une fonction d'étalonnage ($CF_{Mat}$) prédéfinie, fonction dudit matériau, et reliant ladite concentration en oxygène et lesdites trois grandeurs.

2. Procédé selon la revendication précédente dans lequel le codage colorimétrique est le système RGB, les trois grandeurs étant dénommées R, G et B.

3. Procédé selon l'une des revendications précédentes dans lequel la fonction d'étalonnage est un polynôme du premier ou du second degré à trois variables correspondant aux trois grandeurs, et dont les coefficients sont fonction dudit matériau.

4. Procédé selon l'une des revendications précédentes dans lequel l'étape A est réalisée en une fois avec une caméra.

5. Procédé selon l'une des revendications précédentes dans lequel l'étape A est réalisée par balayage avec un scanner à plat.

6. Procédé selon l'une des revendications précédentes dans lequel l'étape B comprend les sous étapes consistant à :

B1 Déterminer pour une pluralité de pixels de l'image une concentration en oxygène (Coxj), dite concentration pixel, via la fonction d'étalonnage,
B2 Déterminer la concentration en oxygène à partir d'une moyenne desdites concentrations pixel.

7. Procédé selon l'une des revendications 1 à 5 dans lequel l'étape B comprend les sous étapes consistant à :

B'1 Déterminer une valeur moyenne (G1m, G2m, G3m) de chaque grandeur à partir de valeurs (G1j, G2j, G3j) desdites grandeurs associées à une pluralité de pixels de l'image,
B'2 Déterminer la concentration en oxygène à partir desdites valeurs moyennes des trois grandeurs via la fonction d'étalonnage.

8. Procédé de fabrication additive métallique par consolidation sélective d'un lit de poudre incluant une étape de détermination de la concentration en oxygène dudit lit de poudre selon l'une des revendications 1 à 7 mise en oeuvre au moins une fois au cours dudit procédé de fabrication additive métallique.

9. Procédé de fabrication additive métallique selon la revendication précédente dans lequel le procédé de détermination de la concentration en oxygène du lit de poudre selon l'une des revendications 1 à 7 est appliqué au début du procédé de fabrication additive métallique, pendant l'injection du gaz inerte dans une chambre de fabrication, et/ou en fin du procédé de fabrication additive métallique, pendant le refroidissement d'une pièce fabriquée.

10. Procédé de fabrication additive métallique selon l'une des revendications 8 ou 9 comprenant une étape d'adaptation de paramètres du procédé en fonction de la valeur de la concentration en oxygène déterminée.

11. Procédé de fabrication additive métallique selon l'une des revendications 8 à 10 comprenant en outre une étape de mélange de la poudre utilisée avec de la poudre neuve lorsque la concentration en oxygène est supérieure à un seuil prédéterminé, ladite étape de mélange étant mise en oeuvre entre deux fabrications de pièces.

12. Dispositif (10) de détermination d'une concentration en oxygène (Cox) d'une poudre (MP) d'un matériau métallique (Mat) présentant une forme de lit de poudre (PB), comprenant :

- un dispositif de capture d'image (ICD) configuré pour réaliser une image (Im) d'au moins une partie dudit lit de poudre, ladite image comprenant un ensemble de pixels (P), un pixel présentant une couleur codée selon un codage colorimétrique comprenant trois grandeurs (G1, G2, G3),
- une première unité de traitement (UT1) configurée pour déterminer la concentration en oxygène de la poudre à partir de valeurs desdites trois grandeurs associées à des pixels de l'image, en utilisant une fonction d'étalonnage ($CF_{Mat}$) prédéfinie, fonction dudit matériau, et reliant ladite concentration en oxygène et lesdites trois grandeurs.

**13.** Programme d'ordinateur comportant des instructions qui conduisent le dispositif de la revendication 12 à exécuter les étapes du procédé selon l'une des revendications 1 à 11.

**14.** Système (100) de fabrication additive métallique par consolidation sélective d'un lit de poudre comprenant :

- un dispositif (10) de détermination de la concentration en oxygène selon la revendication 12,
- un réservoir (Tk) destiné à accueillir un substrat sur lequel une pièce sera fabriquée,
- un dispositif (PSD) d'étalement de la dite poudre en surface du lit de poudre,
- un dispositif (CD) de consolidation de la poudre,
- une deuxième unité de traitement (UT2) configurée pour piloter la mise en oeuvre de la fabrication additive métallique.

**15.** Système de fabrication additive métallique selon la revendication précédente dans lequel le dispositif de capture d'image comprend un scanner à plat (Scan) relié au dispositif d'étalement (PSD).

**16.** Système de fabrication additive métallique selon la revendication 14 dans lequel le dispositif de capture d'image comprend une caméra haute résolution.

**17.** Méthode de détermination d'une fonction d'étalonnage pour la mise en oeuvre du procédé selon l'une des revendications 1 à 7 comprenant les étapes consistant à :

- disposer d'une pluralité d'échantillons de ladite poudre, chaque échantillon présentant une concentration en oxygène différente et connue,
- réaliser une image de chaque échantillon, et déterminer une couleur moyenne associée, une couleur étant codée selon un codage colorimétrique comprenant trois grandeurs (G1, G2, G3), une couleur associée à une valeur de concentration en oxygène étant dénommée donnée de calibration,
- déterminer ladite fonction d'étalonnage par régression à partir desdites données de calibration.

FIG.1

20

A
Réaliser une image Im
P (G1, G2, G3)

B
Déterminer $C_{ox}$
$C_{ox} = CF_{Mat} (G1j, G2j, G3j)$

FIG.2

| (R,G,B) | (R,G,B) | (R,G,B) |
|---------|---------|---------|
| (R,G,B) | (R,G,B) | (R,G,B) |
| (R,G,B) | (R,G,B) | (R,G,B) |

$P_j(R_j, G_j, B_j)$

$C_{oxj}=FC_{Mat}(R_j, G_j, B_j)$

$P_k$

| | | $C_{oxj}$ |
|---|---|---|
| | | |
| | | $C_{oxk}$ |

$C_{ox} = \overline{C_{oxj}}$

Méthode 2

$(R_m, G_m, B_m)$

$C_{ox} = FC_{Mat}(R_m, G_m, B_m)$

FIG.3

EP 4 276 748 A1

20

A

B1

B

Déterminer $C_{oxj}$

$C_{oxj} = CF_{Mat} (G1j, G2j, G3j)$

B2

Déterminer $C_{ox}$

$C_{ox} = \overline{C_{oxj}}$

FIG.4

20

A

Déterminer (G1m, G2m, G3m)

à partir (G1j, G2j, G3j)

B'1

B

Déterminer $C_{ox}$

$C_{ox}= CF_{Mat}$ (G1m, G2m, G3m)

B'2

FIG.5

$C_{ox}$

UT1

$CF_{Mat}$

10

Im

MD

ICD

Opt

PB

# FIG.6

FIG.7

FIG.8

FIG.9

FIG.10

EP 4 276 748 A1

FIG.11

FIG.12

# EP 4 276 748 A1

Europäisches Patentamt

European Patent Office

Office européen des brevets

**RAPPORT DE RECHERCHE EUROPEENNE**

Numéro de la demande

EP 23 17 2928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/327267 A1 (COLLINS PETER C [US] ET AL) 15 octobre 2020 (2020-10-15) | 1,6-14, 17 | INV. G06T7/00 G06T7/90 |
| Y | * abrégé * <br> * alinéa [0109] * <br> * alinéa [0127] * <br> * alinéa [0128] * <br> * alinéa [0131] * <br> * figures 2,24,26 * <br> ----- | 2-5,15, 16 | |
| X,D | DELACROIX TIMOTHÉE ET AL: "Influence of powder recycling on 316L stainless steel feedstocks and printed parts in laser powder bed fusion", ADDITIVE MANUFACTURING, vol. 50, 1 février 2022 (2022-02-01), page 102553, XP093019119, NL ISSN: 2214-8604, DOI: 10.1016/j.addma.2021.102553 | 1,6-14, 17 | |
| Y | * abrégé * <br> * page 6 - page 9 * <br> ----- | 2-5,15, 16 | **DOMAINES TECHNIQUES RECHERCHES (IPC)** |
| Y | ZHONGWEI LI ET AL: "In Situ 3D Monitoring of Geometric Signatures in the Powder-Bed-Fusion Additive Manufacturing Process via Vision Sensing Methods", SENSORS, vol. 18, no. 4, 12 avril 2018 (2018-04-12) , page 1180, XP055712171, DOI: 10.3390/s18041180 * abrégé * * figure 1 * ----- | 2-5,15, 16 | G06T |
| A | US 2021/178468 A1 (LAROUCHE FREDERIC [CA] ET AL) 17 juin 2021 (2021-06-17) * le document en entier * ----- | 1-17 | |

-/--

Le présent rapport a été établi pour toutes les revendications

| Lieu de la recherche | Date d'achèvement de la recherche | Examinateur |
|---|---|---|
| Munich | 29 septembre 2023 | Luca, Mihai Bogdan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 23 17 2928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/331399 A1 (SEITA MATTEO [SG] ET AL) 28 octobre 2021 (2021-10-28) * le document en entier * ----- | 1-17 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 29 septembre 2023 | Luca, Mihai Bogdan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................................
& : membre de la même famille, document correspondant

EPO FORM 1503 03.82 (P04C02)

page 2 de 2

# EP 4 276 748 A1

## ANNEXE AU RAPPORT DE RECHERCHE EUROPEENNE
## RELATIF A LA DEMANDE DE BREVET EUROPEEN NO.

EP 23 17 2928

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2023

| Document brevet cité au rapport de recherche | Date de publication | Membre(s) de la famille de brevet(s) | Date de publication |
|---|---|---|---|
| US 2020327267 A1 | 15-10-2020 | AUCUN | |
| US 2021178468 A1 | 17-06-2021 | AU 2020356593 A1 | 07-04-2022 |
| | | CA 3094676 A1 | 27-03-2021 |
| | | CN 114450104 A | 06-05-2022 |
| | | EP 4034322 A1 | 03-08-2022 |
| | | JP 7309055 B2 | 14-07-2023 |
| | | JP 2023503778 A | 01-02-2023 |
| | | KR 20220061187 A | 12-05-2022 |
| | | US 2021178468 A1 | 17-06-2021 |
| | | WO 2021059242 A1 | 01-04-2021 |
| US 2021331399 A1 | 28-10-2021 | EP 3843977 A1 | 07-07-2021 |
| | | US 2021331399 A1 | 28-10-2021 |
| | | WO 2020046212 A1 | 05-03-2020 |

EPO FORM P0460

Pour tout renseignement concernant cette annexe : voir Journal Officiel de l'Office européen des brevets, No.12/82

27

## RÉFÉRENCES CITÉES DANS LA DESCRIPTION

**Documents brevets cités dans la description**

- US 10981225 B

**Littérature non-brevet citée dans la description**

- **T. DELACROIX et al.** Influence of powder recycling on 316L stainless steel feedstocks and printed parts in laser powder bed fusion. *Addit. Mauf.,* 2019, vol. 25, 84-103